# EUROPEAN PATENT APPLICATION

(11) **EP 4 497 767 A1**
(43) Date of publication of application: **29.01.2025**
(21) Application number: 23188060.0
(22) Date of filing: 27.07.2023
(51) Int. Cl.: C08G 18/08, C08G 18/12, C08G 18/28, C08G 18/32, C08G 18/40, C08G 18/42, C08G 18/48, C08G 18/72, C08G 18/73, C08G 18/75, C08G 18/79, C09D 175/04, C09D 175/06, C09J 175/04, C09J 175/06, C09D 11/00

(54) **AQUEOUS COMPOSITION COMPRISING A POLYURETHANE-POLYUREA POLYMER, A PREPARATION METHOD AND USE THEREOF**

(71) Applicant: Covestro Deutschland AG, 51373 Leverkusen (DE)
(72) Inventor: ZHOU, Shijie, Shanghai, 201206 (CN); WEI, Songli, Shanghai, 200129 (CN); DENG, Rui, Shanghai, 201206 (CN); JIN, Chen, Guangzhou, 510150 (CN); WEIKARD, Jan, 51375 Leverkusen (DE); ZHAO, Dongbo, Shanghai, 201206 (CN)
(74) Representative: Levpat

(57) **Abstract**

The present invention relates to a composition, a preparation method and use thereof, especially in the field of coatings, adhesives or inks, and an article obtained by preparing, coating, bonding, sealing or printing with the composition. The composition comprises (a) a polyurethane-polyurea polymer; (b) a chelating agent; and (c) water. The composition of the present invention has excellent low-temperature performance, good hydrolysis resistance and hydrolysis resistance after thermal storage and has low viscosity at the same time, which is good for industrial production.

## Description

### Technical Field

The present invention relates to a composition, a preparation method and use thereof, especially in the field of coatings, adhesives or inks, and an article obtained by preparing, coating, bonding, sealing or printing with the composition.

### Prior Art

Aqueous polyurethane-polyurea dispersions may be widely used in coatings, adhesives, sealants and printing inks. Compared with traditional solvent-based polyurethanes, they have the advantages of environmental protection performance, non-flammable and non-explosive property, safe storage and high solid content. However, compared with solvent-based polyurethanes, aqueous polyurethane-polyurea dispersions contain per definition water in excess, which may hydrolyse any hydrolysable groups when stored under ambient conditions. In the meanwhile, metal ions (such as those introduced in catalysts for synthesis of polyurethanes or precursors) present in the system may also promote the hydrolysis of the hydrolysable groups in the aqueous polyurethane-polyurea dispersions, which will reduce their application performance. Specifically, it may affect their adhesion, stain resistance, scratch resistance, impact resistance, elongation at break and washing resistance in the field of coating products, and affect the paintability, heat resistance and hydrolysis resistance of sealant and adhesive products in the field of sealant and adhesive products.

It was proposed in patents such as DE 19954500, DE 4410557 or EP 792908 to introduce carboxylate into the polyurethane-polyurea dispersions, and then compound it with carbodiimide to improve the adhesion, wherein the carboxylate is obtained by adding dimethylolpropionic acid to the polyurethane-polyurea. The reactivity of the carboxyl groups with the carbodiimide in the above reaction is low.

CN 108250390 B describes that self-crosslinkable aqueous polyurethane dispersions are obtained by adding a non-sterically hindered bifunctional silane and introducing terminal polyethoxy segments as hydrophilic agent.

CN 109081897 A describes that self-crosslinkable aqueous polyurethane dispersions are obtained by adding a non-sterically hindered bifunctional, a monofunctional or a difunctional silane and introducing terminal polyethoxy segments as hydrophilic agent.

CN 113136160 A describes that metal ions will no longer promote the hydrolysis of polyurethane by adding a water-soluble chelating agent, which complexes with the metal ions in the system to form a stable compound; the water resistance and heat resistance of the aqueous polyurethane are increased by introducing a non-sterically hindered bifunctional silane (KH792); and the content of sulfonate groups are reduced by replacing part of the hydrophilic groups of sulfonates with a small amount of monofunctional polyether, while the polyether is having hydrophilic end groups, and thus the aqueous polyurethane adhesive is prepared with excellent stability.

EP 3026071 A1 describes a process for preparing an aqueous polyurethane dispersion which is obtained from a mixture comprising at least one readily crystallizable polyester polyol and at least one polyether polyol, wherein the polyether polyol is a polyalkylene glycol homopolymer or copolymer containing ethylene oxide units.

WO 2016135162 A1 describes a method for preparing an aqueous peptide-functionalized polyurethane dispersion (PUD) that may be used as adhesives, especially for metal surfaces, which is prepared by reacting a maleimide-terminated polyurethane prepolymer with one or more peptides. By the coupling reaction of the amino acid side chain in the peptide and the maleimide group, the adsorption quality of peptides on the substrate surface is enhanced by means of the adsorption property thereof. The reaction mixture comprises at least a polyether polyol and a polyester polyol, wherein the polyether polyol may be a polyalkylene glycol homopolymer or copolymer, and the polyester polyol may be a crystalline/semi-crystalline polyol.

US 10640702 B describes a method for preparing coated particles and their use as a proppant in hydraulic fracturing to optimize capital and equipment costs and improve production efficiency. The coated particles consist of matrix particles with a particle size not more than 3 mesh and a coating layer comprising a crystalline or semi-crystalline polyester/polyurethane having a decrystallization temperature of at least 35°C and modified with aminosilane. The crystalline or semi-crystalline polyester/polyurethane may contain a monofunctional or difunctional polyether polyol obtained by the polymerization of ethylene oxide or the copolymerization of ethylene oxide and propylene oxide.

WO 2018/158278 A1 describes an aqueous polyurethane-polyurea dispersion comprising a soluble chelating agent salt.

### Summary of the invention

The object of the present invention is to provide a composition, a preparation method and use thereof, especially in the field of coatings, adhesives or inks, and an article obtained by preparing, coating, bonding, sealing or printing with the composition.

The composition according to the present invention comprises:
(a) a polyurethane-polyurea polymer obtained by the reaction of a system comprising the following components:
   (a1) a polyisocyanate;
   (a2) a polymer having a structure of formula I: 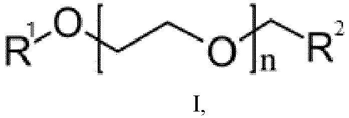 wherein n is 10 to 75, R¹ is an alkyl group containing 1 to 10 carbon atoms, and R² is a moiety containing at least two isocyanate-reactive groups;
   (a3) a polyol other than component a2), which has a hydroxyl functionality of 1.5 to 4;
   (a4) a silane compound comprising one isocyanate-reactive group and at least two methoxy and/or ethoxy groups attached to the silicon atom;
   (a5) a hydrophilic compound comprising 2 to 3 isocyanate-reactive groups, different than (a2); and
   (a6) optionally, a compound comprising 1 to 3 amino and/or hydroxyl groups;
   wherein the polymer having a structure of formula I is in an amount of 0.7% by weight to 9% by weight, and the silane compound is in an amount of 0.14% by weight to 0.6% by weight, relative to the total weight of the polyurethane-polyurea polymer;
(b) at least one water soluble chelating agent selected from the group consisting of ethylenediaminetetraacetates, tartrates, citrates, pyrophosphates, tripolyphosphates, hexametaphosphates, gluconates and/or mixtures of at least two thereof; and
(c) water.

According to one aspect of the present invention, provided is a method for preparing the composition according to the present invention, comprising the steps of: mixing (a) the polyurethane-polyurea polymer or components for preparing the polyurethane-polyurea polymer, (b) the chelating agent and (c) water in any desired manner.

According to another aspect of the present invention, provided is a coating, an adhesive or an ink comprising the composition according to the present invention.

According to yet another aspect of the present invention, provided is the use of the composition according to the present invention for preparing coated products, bonded products or printed products.

According to still another aspect of the present invention, provided is an article comprising a substrate prepared, coated, bonded, sealed, or printed with the composition according to the present invention.

Hydrolysis and subsequent condensation of the methoxy- and/or ethoxy-silanes may occur in the polyurethane-polyurea in the composition of the present invention, so that the composition has good hydrolysis resistance. The soft side segments generated by the polymer having a structure of formula I of the polyurethane-polyurea tends to be separated from the polyurethane hard segments, thereby making the polyurethane soft segments softer and more flexible, thereby preventing the close arrangement of molecules and reducing the chance of the macromolecular groups entangled with each other, and making it difficult to form a structure of polymer clusters. Thus, the composition has good low-temperature stability. The chelating agent salt in the composition of the present invention may reduce the electric double layer force between the particles, thereby reducing the viscosity of the composition well.

Therefore, the composition of the present invention has excellent low-temperature performance, good hydrolysis resistance and hydrolysis resistance after thermal storage, and has low viscosity at the same time, which is good for industrial production.

### Embodiments

The present invention provides a composition comprising:
(a) a polyurethane-polyurea polymer obtained by the reaction of a system comprising the following components:
   (a1) a polyisocyanate;
   (a2) a polymer having a structure of formula I: 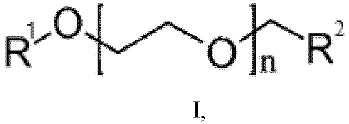 wherein n is 10 to 75, R¹ is an alkyl group containing 1 to 10 carbon atoms, and R² is a moiety containing at least two isocyanate-reactive groups;
   (a3) a polyol other than component a2), which has a hydroxyl functionality of 1.5 to 4;
   (a4) a silane compound comprising one isocyanate-reactive group and at least two methoxy and/or ethoxy groups attached to the silicon atom;
   (a5) a hydrophilic compound comprising 2 to 3 isocyanate-reactive groups, different than (a2); and
   (a6) optionally, a compound comprising 1 to 3 amino and/or hydroxyl groups;
   wherein the polymer having a structure of formula I is in an amount of 0.7% by weight to 9% by weight, and the silane compound is in an amount of 0.14% by weight to 0.6% by weight, relative to the total weight of the polyurethane-polyurea polymer;
(b) at least one water soluble chelating agent selected from the group consisting of ethylenediaminetetraacetates, tartrates, citrates, pyrophosphates, tripolyphosphates, hexametaphosphates, gluconates and/or mixtures of at least two thereof; and
(c) water.

The present invention further provides a preparation method of the composition and use thereof, especially in the field of coatings, adhesives or inks, and an article obtained by coating, bonding, sealing or printing with the composition.

The term "curing" used herein refers to a process of a liquid material from the liquid state to the solid state at room temperature.

The term "coating" used herein refers to a material that can be applied onto the surface of an object by a variety of processes to form a continuous solid coating layer with firm adhesion and certain strength.

The term "adhesive" used herein refers to a chemical material that can be applied onto the surface of an object by a variety of processes, form a coating layer on an object itself or on the surface of one object and of another object, and bond the object itself or the surface of one object to that of another object, which is also used as a synonym for adhesion agent and/or sealant and/or binder.

The term "polyurethane-polyurea" used herein refers to polyurethane and/or polyurethaneurea and/or polyurea.

The term "aqueous polyurethane-polyurea dispersion" as used herein refers to an aqueous polyurethane dispersion and/or an aqueous polyurethaneurea dispersion and/or an aqueous polyurea dispersion.

The content of polyurethane-polyurea in the aqueous polyurethane-polyurea dispersion described herein is equivalent to that of the solid constituents in the aqueous polyurethane-polyurea dispersion.

The term "solid constituents" as used herein refers to solid content or active constituents.

The term "isocyanate-reactive compound" used herein refers to a component containing a group reactive toward isocyanate group, i.e. a component containing a group having Zerewitinoff-active hydrogen, wherein the definition of Zerewitinoff-active hydrogen refers to Rompp's Chemical Dictionary (Römpp Chemie Lexikon), 10th edition, Georg Thieme Verlag Stuttgart, 1996. In general, the group having Zerewitinoff-active hydrogen is understood in the art to mean hydroxyl group (OH), amino group (NHₓ) and thiol group (SH).

The term "isocyanate-reactive group" used herein refers to a group reactive toward isocyanate group, i.e. a group having Zerewitinoff-active hydrogen, wherein the definition of Zerewitinoff-active hydrogen refers to Römpp's Chemical Dictionary (Römpp Chemie Lexikon), 10th edition, Georg Thieme Verlag Stuttgart, 1996. In general, the group having Zerewitinoff-active hydrogen is understood in the art to mean hydroxyl group (OH), amino group (NHₓ) and thiol group (SH).

### Component a) polyurethane-polyurea polymer

### Component a1) polyisocyanate

The polyisocyanate has an isocyanate functionality of preferably not less than 2, more preferably 2 to 4, and most preferably 2.

Component a1) the polyisocyanate has preferably at least two isocyanate groups, and is further preferably one or more of aliphatic polyisocyanates, cycloaliphatic polyisocyanates, aromatic polyisocyanates, araliphatic polyisocyanates, and derivatives thereof having iminooxadiazinedione, isocyanurate, uretdione, carbamate, allophanate, biuret, urea, oxadiazinetrione, oxazolidinone, acylurea and/or carbodiimide groups.

Component a1) the polyisocyanate is further preferably an isocyanate having a general formula: Y(NCO)₂, wherein Y is selected from a divalent aliphatic hydrocarbon-group containing 4 to 12 carbon atoms, a divalent cycloaliphatic hydrocarbon-group containing 6 to 15 carbon atoms, a divalent aromatic hydrocarbon-group containing 6 to 15 carbon atoms, or a divalent araliphatic hydrocarbon-group containing 7 to 15 carbon atoms.

Component a1) the polyisocyanate is also preferably one or more of tetramethylene diisocyanate, pentamethylene diisocyanate, hexamethylene diisocyanate, dodecamethylene diisocyanate, 1,4-cyclohexane diisocyanate, isophorone diisocyanate, 4,4'-dicyclohexylmethane diisocyanate, 4,4'-dicyclohexylpropane diisocyanate, 1,4-benzene diisocyanate, 2,4-toluene diisocyanate, 2,6-toluene diisocyanate, 4,4'-diphenylmethane diisocyanate, 2,2'- and 2,4'-diphenylmethane diisocyanate, tetramethylxylyl diisocyanate and p-xylylene diisocyanate.

Component a1) the polyisocyanate is further preferably selected from hexamethylene diisocyanate, isophorone diisocyanate, a mixture of hexamethylene diisocyanate and isophorone diisocyanate, or a mixture of hexamethylene diisocyanate and 4,4'-dicyclohexylmethane diisocyanate.

Component a1) the polyisocyanate is most preferably selected from a mixture of hexamethylene diisocyanate and isophorone diisocyanate, or a mixture of hexamethylene diisocyanate and 4,4'-dicyclohexylmethane diisocyanate.

Component a1) is preferably in an amount of 5% by weight to 40% by weight, most preferably 8% by weight to 20% by weight, relative to the total weight of the polyurethane-polyurea polymer.

### Component a2) polymer having a structure of formula I

In formula I, n is 10 to 75 and may or may not be an integer, preferably 10 to 40, more preferably 10 to 30.

The at least two isocyanate-reactive groups in R² are selected from at least two amino groups, at least two hydroxyl groups, or at least one amino group and at least one hydroxyl group.

The polymer having a structure of formula I is most preferably one or more of a polymer having a structure of formula II and a polymer having a structure of formula III, 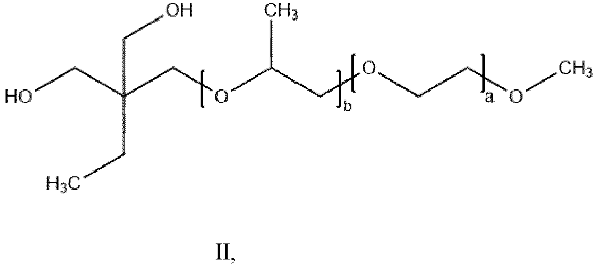 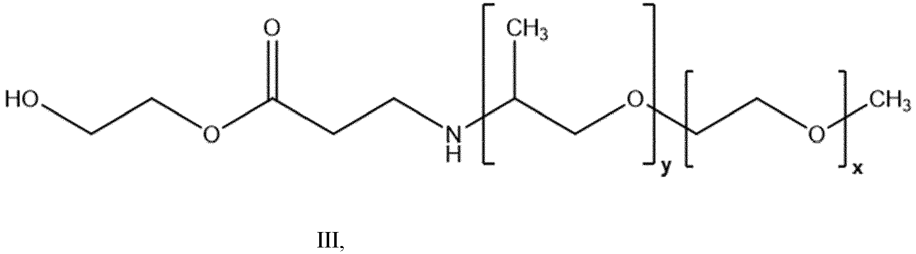 wherein a is 10 to 75 may or may not be an integer, b is 0 to 50 may or may not be an integer in formula II; x is 10 to 75 may or may not be an integer, y is 1 to 50 may or may not be an integer in formula III.

Component a2) the polymer having a structure of formula I has a number-average molecular weight of preferably of 500 g/mol to 4000 g/mol, most preferably 600 g/mol to 1500 g/mol, which is measured by gel chromatography, wherein tetrahydrofuran is used as the mobile phase, and the molecular weight is calculated based on polystyrene as the standard, which is selected with a molecular weight of 200 or higher, and measured with a differential refraction detector (RI detector).

Component a2) the polymer having a structure of formula I has preferably a functionality of 2.

Component a2) the polymer having a structure of formula I is preferably in an amount of 0.7% by weight to 9% by weight, most preferably 0.7% by weight to 4% by weight, relative to the total weight the polyurethane-polyurea polymer.

### Component a3) polyol other than component a2)

Component a3) the polyol other than component a2) is preferably one or more of diols with a number-average molecular weight of 62 to 15000 and polyols with a number-average molecular weight of 62 to 15000, more preferably one or more of diols with a number-average molecular weight of 62 to 5000 and triols with a number-average molecular weight of 92 to 5000, most preferably one or more of polyester polyols containing 1.5 to 3 hydroxyl groups with a number-average molecular weight of 500 to 2500, polycarbonate polyols containing 1.5 to 3 hydroxyl groups with a number-average molecular weight of 400 to 2500, polyether polyols containing 1.5 to 3 hydroxyl groups with a number-average molecular weights of 200 to 2500, polylactone polyols containing 1.5 to 3 hydroxyl groups with a number-average molecular weights of 250 to 2500 and low-molecular-weight alcohols, wherein the number-average molecular weight is measured by gel chromatography, wherein tetrahydrofuran is used as the mobile phase, and the molecular weight is calculated based on polystyrene as the standard, which is selected with a molecular weight of 200 or higher, and measured with a differential refraction detector (RI detector).

The polyether polyol containing 1.5 to 3 hydroxyl groups with a number-average molecular weight of 200 to 2500 is preferably a polytetrahydrofuran polyol containing 1.5 to 3 hydroxyl groups with a number-average molecular weight of 200 to 2500.

Component a3) the polyol other than component a2) has the enthalpy of fusion of preferably not less than 15 J/g, more preferably 25 J/g to 100 J/g, most preferably 40 J/g to 80 J/g, obtained by DSC from the first heating curve from 20°C to 100°C according to DIN 65467, method A, wherein the loading volume is 10-20 mg, and the heating rate is 20 K/min.

Component a3) is preferably in an amount of 5% by weight to 94% by weight, most preferably 70% by weight to 90% by weight, relative to the total weight of the composition.

### Component a4) silane compound

Component a4) is a silane compound comprising one isocyanate-reactive group and at least two methoxy and/or ethoxy groups attached to the silicon atom; the isocyanate-reactive group is preferably a primary or secondary amino group.

Component a4) the silane compound is preferably one or more of bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane; more preferably bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane.

Additionally, respective aspartic esters which can be synthesized from the above mentioned aminofunctional silanes and esters of unsaturated dicarboxylic acids like maleic acid can be used (formula IV). 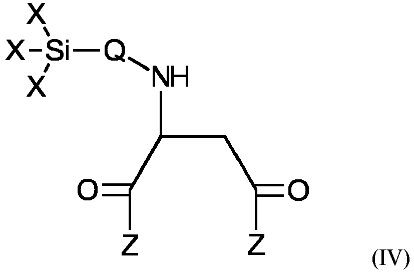 with X being same or different methoxy-, ethoxy- methyl- or ethyl- with the proviso that at least two groups are methoxy- and or ethoxy-; with Q being alkyl group, preferably n-propyl- and Z being alkoxy-groups, preferably methoxy- or ethoxy-.

Further preferred compounds are N-(3-triethoxy¬silyl¬propyl)aspartic diethyl ester, N-(3-trimethoxysilylpro¬pyl)-aspartic diethyl ester and N-(3-dimethoxymethylsilylpropyl)-aspartic diethylester.

Component a4) is most preferably one or more of (3-aminopropyl)trimethoxysilane, (3-aminopropyl)triethoxysilane, and 3-aminopropylmethyldimethoxysilane.

Component a4) the silane compound is preferably in an amount of 0.14% by weight to 0.6% by weight, most preferably 0.18% by weight to 0.4% by weight, relative to the total weight of the composition.

### Component a5) hydrophilic compound comprising 2 to 3 isocyanate-reactive groups

The hydrophilic group of the hydrophilic compound preferably comprises one or more of ionic groups, potentially ionic groups, and non-ionic groups.

Component a5) the hydrophilic compound comprising 2 to 3 isocyanate-reactive groups is preferably one or more of N-(2-aminoethyl)-2-aminoethanesulfonates, dimethylolpropionates and N-(2-aminoethyl)-2-aminoethanecarboxylates.

Component a5) is preferably in an amount of 0.2% by weight to 50% by weight, most preferably 1% by weight to 5% by weight, relative to the total weight of the composition.

### Component a6) compound comprising 1 to 3 amino and/or hydroxyl groups

Component a6) the compound comprising 1 to 3 amino and/or hydroxy groups may comprise 1 to 3 amino groups or 1 to 3 hydroxy groups or a combination of amino and hydroxy groups.

Component a6) the compound comprising 1 to 3 amino and/or hydroxy groups preferably comprises at least one amino group; is further preferably one or more aliphatic monoamines, cycloaliphatic monoamines, aliphatic primary and/or secondary diamines, amides, aliphatic primary and/or secondary triamines, aliphatic primary and/or secondary amino alcohols, cycloaliphatic primary and/or secondary diamines, cycloaliphatic primary and/or secondary triamines, cycloaliphatic primary and/or secondary amino alcohols; most preferably one or more of isophoronediamine, N-(2-hydroxyethyl)ethylenediamine and diethanolamine.

Component a6) is preferably in an amount not more than 10% by weight, most preferably 0.5% by weight to 3% by weight, relative to the total weight of the composition.

### Component b) chelating agent

Component b) the chelating agent is preferably one or more of ethylenediaminetetraacetates, tartrates, citrates, pyrophosphates, tripolyphosphates, hexametaphosphates and gluconates.

Component b) is preferably in an amount of 0.05% by weight to 0.5% by weight, most preferably 0.1% by weight to 0.2% by weight, relative to the total weight of the composition.

The chelating agent b) is preferably characterized in that an aqueous solution thereof at a concentration of 4.3^{∗}10⁻⁷ mol/g and at a temperature of 23°C has a pH value in the range of 3-11, preferably in the range of 4-10, and most preferably in the range of 5-8.

### Method for preparing the composition

Preferably, an aqueous polyurethane-polyurea dispersion is formed from (a) the polyurethane-polyurea polymer and (c) water, and then (c) the chelating agent is introduced to obtain the composition.

The chelating agent can be added in solid or aqueous form. It is preferably added in the form of an aqueous solution of the chelating agent, which will facilitate the dispersion of the chelating agent.

A water-soluble salt of the chelating agent can be directly added or formed in the composition by acid/base neutralization. The acid/base neutralization may be complete or incomplete neutralization, preferably complete neutralization.

The chelating agent can be added during the chain extension or neutralization process for preparing the polyurethane-polyurea polymer, or after the chain extension, or during or after the dispersion of the polyurethane polymer in water, or after the distillation of the polyurethane polymer.

The acid may be a free acid capable of neutralization with a base to form the water-soluble salt of the chelating agent. The free acid is preferably one or more of aminocarboxylic acids, hydroxycarboxylic acids, inorganic polyphosphoric acids, hydroxyaminocarboxylic acids, organic polyphosphonic acids and polycarboxylic acids.

The aminocarboxylic acids may be preferably one or more of ethylenediaminetetraacetic acid and aminotriacetic acid.

The hydroxycarboxylic acids may be preferably one or more of tartaric acid, citric acid and gluconic acid.

The inorganic polyphosphoric acids may be preferably one or more of tripolyphosphoric acid, hexametaphosphoric acid and pyrophosphoric acid.

The hydroxyaminocarboxylic acids may be preferably one or more of hydroxyethylethylenediaminetriacetic acid and dihydroxyethylglycine.

The water in the composition can be introduced before the formation of the polyurethane-polyurea polymer, during the formation of the polyurethane-polyurea polymer, or after the formation of the polyurethane-polyurea polymer. The water is preferably introduced after the formation of the polyurethane-polyurea polymer.

The aqueous polyurethane-polyurea dispersion is formed by mixing of the water and the polyurethane-polyurea polymer.

The amount of organic solvent in the aqueous polyurethane-polyurea dispersion is preferably less than 1% by weight, relative to the total weight of the aqueous polyurethane-polyurea dispersion.

The content of the solid constituents of the aqueous polyurethane-polyurea dispersion is preferably 15% by weight to 70% by weight, more preferably 30% by weight to 60% by weight, and most preferably 45% by weight to 55% by weight, relative to the total weight of the aqueous polyurethane-polyurea dispersion. The content of the solid constituents is measured using a HS153 moisture analyzer from Mettler Toledo according to DIN-EN ISO 3251:2019, in which the heating temperature is 120°C, and the test end point is determined when the weight loss of the sample is less than 1 mg/140 seconds.

The pH value of the aqueous polyurethane-polyurea dispersion is preferably 4 to 11, most preferably 5 to 10. The pH value is measured at 23°C using a PB-10 pH meter from Sartorius, Germany.

The average particle size of the aqueous polyurethane-polyurea dispersion is preferably of 20nm to 750nm, more preferably 50nm to 450nm, most preferably 100nm to 250nm, which is determined by laser correlation (laser particle sizer) with a ZEN 1600 tester from Malvern, UK, according to ISO 13321: 1996 test method, in which 1 drop (about 0.05 g) of the sample is added to 50 ml of ultrapure water, and the diluted sample is tested at 23.0 ± 0.1°C, material: polystyrene latex (RI: 1.590; absorption rate: 0.010), dispersant: water (temperature: 23.0°C; viscosity: 0.9308 cP; RI: 0.330), equilibration time: 60 seconds, using a disposable cuvette DTS0012, positioning method: automatic attenuation selection, best position found: yes, analysis model: universal (normal resolution), measurement angle: 173° backscatter (NIBS default), runs: 3, run duration: 10 seconds, measurements: 10.

The viscosity of the aqueous polyurethane-polyurea dispersion is preferably of 300 mPa·s to 6000 mPa·s, which is measured according to ISO 2555:2018 at 23°C using a DV-II+Pro. rotational viscometer from Brookfield, rotor type: s 62-64, speed: 30 RPM, test temperature: 23°C.

The aqueous polyurethane-polyurea dispersion can be prepared using methods commonly used in the art, such as emulsification dispersion method, prepolymer mixing method, acetone method, melt emulsification method, ketimine method, solid phase dispersion method, and related derivatives thereof. A summary of the methods described above can be found in Methoden der Organischen Chemie (Houben-Weyl, .sup. 4th edition, volume E20/part 2, p. 1682, Georg Thieme Verlag, Stuttgart, 1987). Among them, the melt emulsification method and the acetone method are more preferred choices, and the acetone method is the most preferred.

Preferably, the method for preparing the aqueous polyurethane-polyurea dispersion comprises the following steps:
i. reacting some or all of component a1) the polyisocyanate, component a2) the polymer having a structure of formula I and component a3) the polyol other than component a2) to obtain a prepolymer;
ii. reacting the prepolymer, component a4) the silane compound, component a5) the hydrophilic compound comprising 2 to 3 isocyanate-reactive groups, and optionally component a6) the compound comprising 1 to 3 amino and/or hydroxyl groups to obtain the polyurethane -polyurea;
iii. introducing component c) water before, during or after step ii for dispersing; in a preferred embodiment, adding component c) water slowly while stirring, and allowing the reaction at 20 to 60°C, preferably 40 to 60°C, most preferably 40 to 55°C, stirring for 10-30 minutes; and
iv. obtaining the aqueous polyurethane-polyurea dispersion by adding component b) the chelating agent.

In the step i, components a2) and a3) are preferably added into the reactor, and heated to 30 to 80°C, preferably 50 to 70°C, under stirring. When the water content of the mixture of step i is below 0.5%, preferably below 0.2% (calculated by weight charged to the reactor), component a1) is added while stirring, and the exothermic reaction is allowed to proceed at 50 to 140°C, preferably 60 to 110°C, most preferably 80 to 90°C, until the theoretically calculated reaction end point is reached.

In the step ii, component a5) and optionally component a6) are preferably dissolved in water, and component a4) is dissolved in acetone, and separately added to the prepolymer while stirring. The exothermic reaction is allowed to proceed at 20 to 60°C, preferably 40 to 60°C, most preferably 40 to 55°C, and react for 30 minutes to obtain polyurethane-polyurea.

In the step iv, component b) is preferably added slowly while stirring at 20 to 40°C, preferably 20 to 30°C.

The preparation method may further comprise a step v.: introducing an organic solvent, which is miscible with water but inert to isocyanate groups, during or after step i, and removing the organic solvent from the aqueous polyurethane-polyurea dispersion.

The organic solvent is preferably a solvent that is miscible with water but inert to isocyanate groups, and is further preferably one or more of acetone, butanone, propylene glycol dimethyl ether, other ethers without hydroxyl functional group and esters without hydroxyl functional group; most preferably one or more of acetone and butanone.

The organic solvent preferably does not comprise N-methyl or N-ethyl pyrrolidone compounds.

The organic solvent is preferably partially or completely removed by distillation, wherein the distillation temperature is of 10°C to 100°C, and the distillation time is of 1 hour to 12 hours.

The distillation temperature is most preferably of 25°C to 60°C

The distillation time is most preferably of 2 hours to 7hours.

The rectification pressure is preferably 500 mbar to 50 mbar, most preferably 200 mbar to 60 mbar.

In order to accelerate the reaction of step i, a catalyst commonly used in the preparation of prepolymers may be used, such as triethylamine, 1,4-diazabicyclo-[2,2,2]-octane, bismuth sebacate or neodecanoate, tin dioctanoate, tin(II) chloride or dibutyl tin dilaurate, most preferably tin(II) chloride and bismuth neodecanoate.

The catalyst may be placed in the reactor simultaneously with the components of step i, or added later.

The conversion degree of the components of step i can be obtained by testing the NCO content in the components. To this end, spectroscopic measurements, such as infrared or near-infrared spectroscopy, as well as refractive index determination or chemical analysis, such as titration, may be performed on the extracted samples at the same time.

The prepolymer may be in the solid state or in the liquid state at normal temperature.

Component a1) the polyisocyanate and component a2) the polymer having a structure of formula I can be added at one time or in multiple additions, and can be the same or different constituents compared to those added before.

The organic solvent present in the polyurethane polymer can be removed by distillation. The organic solvent may be removed during the formation of the polyurethane polymer or after the formation of the polyurethane polymer.

### Coating, adhesive or ink

The coating, adhesive or ink preferably further comprises an additive. The additive is preferably one or more of emulsifiers, light stabilizers, antioxidants, sterilants, fillers, antisettling agents, defoamers, wetting agents, flow conditioners, reactive diluents, plasticizers, neutralizers, catalysts, auxiliary solvents, thickeners, pigments, dyes, matting agents and tackifiers. The additives can be added during and/or after the preparation of the polyurethane-polyurea dispersion.

Selection and dosage of the additives are in principle known to those of ordinary skill in the art and can be easily determined.

The aqueous polyurethane-polyurea dispersion of the present invention may also be mixed with other water- or solvent-containing oligomers or polymers and used together, such as water- or solvent-containing polyester, polyurethane, polyurethane-polyacrylate, polyacrylate, polyether, polyester-polyacrylate, alkyd resin, addition polymer, polyamide/imide or polyepoxide. The compatibility of such mixtures should be tested in each case by means of simple preliminary test.

The aqueous polyurethane-polyurea dispersion of the present invention may also be mixed with other compounds containing functional groups such as carboxyl group, hydroxyl group and/or blocked isocyanate group, and used together.

The coating, adhesive or ink of the present invention is obtained by the methods known to those skilled in the art.

### Coated product, bonded product or printed product

The substrate is preferably one or more of wood, metal, glass, fiber, textile, artificial leather, real leather, paper, plastics, rubber, foam, ceramic and various polymer coating layers, and most preferably one or more of textile, plastic, ceramic, metal, real leather, artificial leather and various polymer coating layers.

The coating may be carried out by applying the coating, adhesive or ink onto the entire surface of the substrate or only onto one or more parts of the surface of the substrate.

The coating may be carried out by brushing, dipping, spraying, roller coating, knife coating, flow coating, casting, or printing.

### Description of the drawings

The present invention will be illustrated in more detail below with reference to the drawings, in which:
Fig. 1 is a schematic view for bonding of the sample strip.
Fig. 2 is a schematic view for the hydrolysis resistance test of the sample strip.

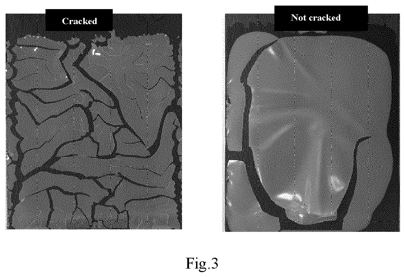

Fig. 3 is a schematic view for cracking and non-cracking of dry films in the film-forming test at low temperature.

### Examples

Unless defined otherwise, all technical and scientific terms used herein have the same meaning as commonly understood by those skilled in the art. When the definition of a term in this specification conflicts with the meanings commonly understood by those skilled in the art, the definition described herein shall prevail.

Unless indicated otherwise, all numbers expressing quantities of ingredients, reaction conditions and the like used in the specification and claims are to be understood as being modified by the term "about". Accordingly, unless indicated to the contrary, the numerical parameters set forth herein are approximations that can vary depending upon the desired properties to be obtained.

The wording "and/or" used herein refers to one or all of the cited elements.

The wording "include" and "comprise" used herein cover the presence of the mentioned elements alone and the presence of other elements not mentioned in addition to the mentioned elements.

Unless otherwise indicated, the wordings "a", "an", and "the" used herein are intended to include "at least one" or "one or more". For example, the wording "a component" refers to one or more components, so that more than one component may be considered and may be adopted or used in the implementation of the described embodiments.

All percentages in the present invention are weight percentage, unless otherwise stated.

The analysis and measurement in the present invention are performed at 23±2°C, unless otherwise stated.

The content of solid constituents (solids content) of the aqueous polyurethane-polyurea dispersion is measured using a HS153 moisture analyzer from Mettler Toledo according to DIN-EN ISO 3251:2019, in which the heating temperature is 120°C, and the test end point is determined when the weight loss of the sample is less than 1 mg/140 seconds.

The average particle size of the aqueous polyurethane-polyurea dispersion is determined using laser correlation (laser particle sizer) with a ZEN 1600 tester from Malvern, UK, according to ISO 13321:1996 test method, in which 1 drop (about 0.05 g) of the sample is added to 50 ml of ultrapure water, and the diluted sample is tested at 23.0 ± 0.1°C, material: polystyrene latex (RI: 1.590; absorption rate: 0.010), dispersant: water (temperature: 23.0°C; viscosity: 0.9308 cP; RI: 0.330), equilibration time: 60 seconds, using a disposable cuvette DTS0012, positioning method: automatic attenuation selection, best position found: yes, analysis model: universal (normal resolution), measurement angle: 173° backscatter (NIBS default), runs: 3, run duration: 10 seconds, measurements: 10.

The pH value of the aqueous polyurethane-polyurea dispersion is measured according to DIN ISO 976:2016-12 at 23 °C with a PB-10 pH meter from Sartorius, Germany.

The pH value of chelating agent aqueous solution is measured according to DIN ISO 976:2016-12 at concentration of 4.3^{∗}10⁻⁷ mol/g under 23 °C with a PB-10 pH meter from Sartorius, Germany.

The viscosity of the aqueous polyurethane-polyurea dispersion is measured according to ISO 2555:2018 at 23° C using a DV-II+Pro. rotational viscometer from Brookfield, rotor type: s 62-64, speed: 30 RPM, test temperature: 23°C.

The isocyanate group (NCO) content is determined by volume according to DIN-EN ISO 11909:2007.

### Raw materials and agents

Polyester I: Semicrystalline form based on adipic acid and 1,4-butanediol, difunctional polyester polyol, number average molecular weight Mn of 2250 g/mol, hydroxyl number of 50 mgKOH/g, glass transition temperature of -61 °C, melting temperature of 49°C, and enthalpy of fusion of 80 J/g.

Polyester II: Semicrystalline form based on adipic acid, 1,6-hexanediol and neopentyl glycol (1,6-hexanediol to neopentyl glycol with molar ratio of 3:2), difunctional polyester polyol, number average molecular weight Mn of 1700 g/mol, hydroxyl number of 66 mgKOH/g, glass transition temperature of -63°C, melting temperature of 26°C, and enthalpy of fusion of 55 J/g.

Polyether I: Ymer N120, a difunctional polyether comprising side methoxypolyethylene oxide chains, with a number-average molecular weight of 1000 g/mol, commercially available from Perstorp Chemitec AB (SE).

Polyether II: Ymer N180, a difunctional polyether comprising side methoxypolyethylene oxide chains, with a number-average molecular weight of 600 g/mol, commercially available from Perstorp Chemitec AB (SE).

Polyether III: MPEG 750, monofunctional polyethoxy ether, with a number-average molecular weight of 750 g/mol, commercially available from Shanghai Dongda Chemical Co., Ltd.

Isocyanate I: Desmodur^{®} H, hexamethylene diisocyanate, commercially available from Covestro, Germany.

Isocyanate II: Desmodur^{®} I, Isophorone diisocyanate, commercially available from Covestro, Germany.

Silane I: PC1200, N-β-(aminoethyl)-γ-aminopropyltrimethoxysilane, commercially available from Sisbo Silicones.

Silane II: PC1210, N-β-(aminoethyl)-γ-aminopropyltriethoxysilane, commercially available from Sisbo Silicones.

Silane III: PC1130, 3-aminopropylmethyldimethoxysilane, commercially available from Sisbo Silicones.

Silane IV: PC1100, (3-aminopropyl)triethoxysilane, commercially available from Sisbo Silicones.

Silane V: PC1110, (3-aminopropyl)trimethoxysilane, commercially available from Sisbo Silicones. Lucramul 1820 liquid: emulsifier, fatty alcohol polyethylene glycol/propylene glycol) ether, supplied as a 15% to 20% aqueous solution, commercially available from Levaco GmbH, Germany. Tetrasodium ethylenediaminetetraacetate: analytical grade, commercially available from Sinopharm Chemical Reagent Co., Ltd. (pH = 10.4, at 4.3^{∗}10⁻⁷ mol/g aqueous solution)

Sodium citrate: analytical grade, commercially available from Sinopharm Chemical Reagent Co., Ltd. (pH = 8.0, at 4.3^{∗}10⁻⁷ mol/g aqueous solution)

Tetra-sodium pyrophosphate: analytical grade, commercially available from Sinopharm Chemical Reagent Co., Ltd. (pH = 9.9, at 4.3^{∗}10⁻⁷ mol/g aqueous solution)

Di-sodium pyrophosphate: analytical grade, commercially available from Sinopharm Chemical Reagent Co., Ltd. (pH = 5.3, at 4.3^{∗}10⁻⁷ mol/g aqueous solution)

Sodium N-(2-aminoethyl)-2-aminoethanesulfonate: Vestamin A 95, 49% in water, commercially available from Evonik, Germany.

Diethanolamine: analytical grade, commercially available from Sinopharm Chemical Reagent Co., Ltd.

Hydroxyethylethylenediamine: analytical grade, commercially available from Sinopharm Chemical Reagent Co., Ltd.

Isophorone diamine: analytical grade, commercially available from Sinopharm Chemical Reagent Co., Ltd.

Borchigel Gel L75N: thickener, as a transparent liquid, with a concentration of 25%, commercially available from Borchers Company.

DESMODUR 2802: aliphatic polycarbodiimide, as a beige liquid, with a solid content of 40%, Covestro, Germany.

### Preparation of compositions

If the raw materials in the following examples are aqueous emulsions or aqueous solutions, the weight is that including water.

### Composition 1

548.4g of polyester I and 5g of polyether I were dehydrated at 110°C and 80 mbar for 1 hour. Then, 2.3g of 1,4-butanediol were added and cooled while stirring. 56.65 g of isocyanate I and 7.51 g of isocyanate II were added at 60°C and stirred at 80 to 90°C until an isocyanate content of 1.3% was reached. It was then dissolved in 930g of acetone and cooled to 50°C to obtain a reaction solution. A solution of 11.5g of sodium N-(2-aminoethyl)-2-aminoethanesulfonate, 1.14g of isophorone diamine, 2.0g of hydroxyethylethylenediamine in 50g of water and a solution of 2.17g of silane IV in 21.7g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 40 g of Lucramul 1820 liquid and 12.5 g of a 5% aqueous solution of sodium citrate were added respectively. A composition was obtained with a content of solid constituents of 50.6% by weight and an average particle size in the dispersed phase of 162 nm, a pH value of 6.7 and a viscosity of 318 mPa·s.

### Composition 2

548.4 g of polyester I and 5 g of polyether I were dehydrated at 110°C and 80 mbar for 1 hour. Then, 2.3 g of 1,4-butanediol were added and cooled while stirring. 56.65 g of isocyanate I and 7.51 g of isocyanate II were added at 60°C and stirred at 80 to 90°C until an isocyanate content of 1.3% was reached. It was then dissolved in 930g of acetone and cooled to 50°C to obtain a reaction solution. A solution of 11.5g of sodium N-(2-aminoethyl)-2-aminoethanesulfonate, 1.14g of isophorone diamine, 2.0g of hydroxyethylethylenediamine in 50g of water and a solution of 1.60g of silane III in 16.0g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 40 g of Lucramul 1820 liquid and 12.5 g of a 5% aqueous solution of tetrasodium ethylenediaminetetraacetate were added respectively. A composition was obtained with a content of solid constituents of 53.0% by weight and an average particle size in the dispersed phase of 162 nm, a pH value of 6.7 and a viscosity of 416 mPa s.

### Composition 3

534.4g of polyester I and 12.5g of polyether I were dehydrated at 110°C and 80 mbar for 1 hour. Then, 2.3 g of 1,4-butanediol were added and cooled while stirring. 56.38g of isocyanate I and 7.9g of isocyanate II were added at 60°C and stirred at 80 to 90°C until an isocyanate content of 1.3% was reached. It was then dissolved in 930g of acetone and cooled to 50°C to obtain a reaction solution. A solution of 11.6g of sodium N-(2-aminoethyl)-2-aminoethanesulfonate, 1.9g of hydroxyethylethylenediamine in 50g of water and a solution of 1.25g of silane V in 12.5g of acetone were added respectively to the acetone solution with the prepolymer dissolved therein while vigorously stirring. After stirring for 30 min, the mixture was dispersed by adding 570 g of water. The acetone was separated by distillation for another 5 hours. Upon the acetone content being less than 1.0% by weight, 40 g of Lucramul 1820 liquid and 12.5 g of a 5% aqueous solution of tetrasodium pyrophosphate were added respectively. A composition was obtained with a content of solid constituents of 50% by weight and an average particle size in the dispersed phase of 163 nm, a pH value of 6.7 and a viscosity of 1218 mPa·s.

### Composition 4

503.4g of polyester I and 25g of polyether I were dehydrated at 110°C and 80 mbar for 1 hour. Then, 2.3 g of 1,4-butanediol were added and cooled while stirring. 60.62g of isocyanate I and 8.04g of isocyanate II were added at 60°C and stirred at 80 to 90°C until an isocyanate content of 1.7% was reached. It was then dissolved in 930g of acetone and cooled to 50°C to obtain a reaction solution. A solution of 12.0g of sodium N-(2-aminoethyl)-2-aminoethanesulfonate, 1.03g of diethanolamine, 3.28g of hydroxyethylethylenediamine in 50g of water and a solution of 1.75g of silane V in 17.5g of acetone were added respectively to the acetone solution with the prepolymer dissolved therein while vigorously stirring. After stirring for 30 min, the mixture was dispersed by adding 570 g of water. The acetone was separated by distillation for another 7 hours. Upon the acetone content being less than 1.0% by weight, 40 g of Lucramul 1820 liquid and 12.5 g of a 5% aqueous solution of tetrasodium pyrophosphate were added respectively. A composition was obtained with a content of solid constituents of 49% by weight and an average particle size in the dispersed phase of 164 nm, a pH value of 6.6 and a viscosity of 5432 mPa s.

### Composition 5

542.8g of polyester I and 4.5g of polyether II were dehydrated at 110°C and 80 mbar for 1 hour. Thus, 2.3 g of 1,4-butanediol were added and cooled while stirring. 59.56g of isocyanate I and 3.78g of isocyanate II were added at 60°C and stirred at 80 to 90°C until an isocyanate content of 1.3% was reached. It was then dissolved in 930g of acetone and cooled to 50°C to obtain a reaction solution. A solution of 11.5g of sodium N-(2-aminoethyl)-2-aminoethanesulfonate, 2.3g of hydroxyethylethylenediamine in 50g of water and a solution of 1.25g of silane V in 12.5g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 40 g of Lucramul 1820 liquid and 12.5 g of a 5% aqueous solution of tetrasodium pyrophosphate were added respectively. A composition was obtained with a content of solid constituents of 50.2% by weight and an average particle size in the dispersed phase of 174 nm, a pH value of 6.7 and a viscosity of 375 mPa·s.

### Composition 6

Same as main composition of composition 5, but with di-sodium pyrophosphate added instead of tetra-sodium pyrophosphate in the last step. A composition was obtained with a content of solid constituents of 50.0% by weight and an average particle size in the dispersed phase of 158 nm, a pH value of 6.4 and a viscosity of 520 mPa·s.

### Comparative composition 1

548.4g of polyester I and 5g of polyether I were dehydrated at 110°C and 80 mbar for 1 hour. Thus, 2.3 g of 1,4-butanediol were added and cooled while stirring. 56.65 g of isocyanate I and 7.51 g of isocyanate II were added at 60°C and stirred at 80 to 90°C until an isocyanate content of 1.3% was reached. It was then dissolved in 930g of acetone and cooled to 50°C to obtain a reaction solution. A solution of 11.5g of sodium N-(2-aminoethyl)-2-aminoethanesulfonate, 2.7g of hydroxyethylethylenediamine in 50g of water and a solution of 2.17g of silane IV in 21.7g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 40 g of Lucramul 1820 liquid were added. A comparative composition was obtained with a content of solid constituents of 50.1% by weight and an average particle size in the dispersed phase of 162 nm, a pH value of 6.8 and a viscosity of 1152 mPa s.

### Comparative composition 2

548.4 g of polyester I and 5 g of polyether I were dehydrated at 110°C and 80 mbar for 1 hour. Thus, 2.3 g of 1,4-butanediol were added and cooled while stirring. 56.65g of isocyanate I and 7.51g of isocyanate II were added at 60°C and stirred at 80 to 90°C until an isocyanate content of 1.3% was reached. It was then dissolved in 930g of acetone and cooled to 50°C to obtain a reaction solution. A solution of 11.5g of sodium N-(2-aminoethyl)-2-aminoethanesulfonate, 2.7g of hydroxyethylethylenediamine in 50g of water and a solution of 1.60g of silane III in 16.0g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 40 g of Lucramul 1820 liquid were added. A comparative composition was obtained with a content of solid constituents of 49.7% by weight and an average particle size in the dispersed phase of 162 nm, a pH value of 6.7 and a viscosity of 1280 mPa·s.

### Comparative composition 3

534.4g of polyester I and 12.5g of polyether I were dehydrated at 110°C and 80 mbar for 1 hour. Them, 2.3 g of 1,4-butanediol were added and cooled while stirring. 56.38g of isocyanate I and 7.9g of isocyanate II were added at 60°C and stirred at 80 to 90°C until an isocyanate content of 1.3% was reached. It was then dissolved in 930g of acetone and cooled to 50°C to obtain a reaction solution. A solution of 11.6g of sodium N-(2-aminoethyl)-2-aminoethanesulfonate, 1.9g of hydroxyethylethylenediamine in 50g of water and a solution of 1.25g of silane V in 12.5g of acetone were added respectively to the acetone solution with the prepolymer dissolved therein while vigorously stirring. After stirring for 30 min, the mixture was dispersed by adding 570 g of water. The acetone was separated by distillation for another 5 hours. Upon the acetone content being less than 1.0% by weight, 40 g of Lucramul 1820 liquid were added. A comparative composition was obtained with a content of solid constituents of 50% by weight and an average particle size in the dispersed phase of 163 nm, a pH value of 6.6 and a viscosity of 2800 mPa s.

### Comparative composition 4

503.4g of polyester I and 25g of polyether I were dehydrated at 110°C and 80 mbar for 1 hour. Then, 2.3 g of 1,4-butanediol were added and cooled while stirring. 60.62g of isocyanate I and 8.04g of isocyanate II were added at 60°C and stirred at 80 to 90°C until an isocyanate content of 1.7% was reached. It was then dissolved in 930g of acetone and cooled to 50°C to obtain a reaction solution. A solution of 12.0g of sodium N-(2-aminoethyl)-2-aminoethanesulfonate, 3.75g of hydroxyethylethylenediamine in 50g of water and a solution of 1.75g of silane V in 17.5g of acetone were added respectively to the acetone solution with the prepolymer dissolved therein while vigorously stirring. After stirring for 30 min, the mixture was dispersed by adding 570 g of water. The acetone was separated by distillation for another 7 hours. Upon the acetone content being less than 1.0% by weight, 40 g of Lucramul 1820 liquid were added. A comparative composition was obtained with a content of solid constituents of 49% by weight and an average particle size in the dispersed phase of 164 nm, a pH value of 6.8 and a viscosity of 10400 mPa·s.

### Comparative composition 5

506.3g of polyester I were dehydrated at 110°C and 80 mbar for 1 hour. Then, 2.3 g of 1,4-butanediol were added and cooled while stirring. 58.87g of isocyanate I and 3.27g of isocyanate II were added at 60°C and stirred at 80 to 90°C until an isocyanate content of 1.7% was reached. It was then dissolved in 930g of acetone and cooled to 50°C to obtain a reaction solution. A solution of 12.6g of sodium N-(2-aminoethyl)-2-aminoethanesulfonate, 3.41g of hydroxyethylethylenediamine in 50g of water and a solution of 1.17g of silane V in 11.7g of acetone were added respectively to the acetone solution with the prepolymer dissolved therein while vigorously stirring. After stirring for 30 min, the mixture was dispersed by adding 570 g of water. The acetone was separated by distillation for another 3.5 hours. Upon the acetone content being less than 1.0% by weight, 33.3g of Lucramul 1820 liquid and 11.6g of a 5% aqueous solution of tetra-sodium pyrophosphate were added respectively. A comparative composition was obtained with a solid content of 53.0% by weight and an average particle size in the dispersed phase of 179 nm, a pH value of 6.7 and a viscosity of 312 mPa·s.

### Comparative composition 6

543.4g of polyester I and 1.9g of polyether I were dehydrated at 110°C and 80 mbar for 1 hour, and then cooled. 61.5g of isocyanate I and 5.11g of isocyanate II were added at 60°C and stirred at 80 to 90°C until an isocyanate content of 1.8% was reached. It was then dissolved in 930g of acetone and cooled to 50°C to obtain a reaction solution. A solution of 12.0g of sodium N-(2-aminoethyl)-2-aminoethanesulfonate, 7.08g of isophorone diamine, 2.0g of hydroxyethylethylenediamine in 78.92g of water and a solution of 1.86g of silane V in 18.6g of acetone were added respectively to the acetone solution with the prepolymer dissolved therein while vigorously stirring. After stirring for 30 min, the mixture was dispersed by adding 542g of water. The acetone was separated by distillation for another 3 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 52.5% by weight and an average particle size in the dispersed phase of 224 nm, a pH value of 6.6 and a viscosity of 85 mPa·s.

### Comparative composition 7

547.2g of polyester I and 3.9g of polyether I were dehydrated at 110°C and 80 mbar for 1 hour. Then, 0.8g of 1,4-butanediol were added and cooled while stirring. 59.1g of isocyanate I and 5.94g of isocyanate II were added at 60°C and stirred at 80 to 90°C until an isocyanate content of 1.67% was reached. It was then dissolved in 930g of acetone and cooled to 50°C to obtain a reaction solution. A solution of 12.0g of sodium N-(2-aminoethyl)-2-aminoethanesulfonate, 2.98g of isophorone diamine, 1.0g of hydroxyethylethylenediamine in 50g of water and a solution of 1.70g of silane V in 17.0g of acetone were added respectively to the acetone solution with the prepolymer dissolved therein while vigorously stirring. After stirring for 30 min, the mixture was dispersed by adding 542g of water. The acetone was separated by distillation for another 3 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 49.6% by weight and an average particle size in the dispersed phase of 181 nm, a pH value of 6.5 and a viscosity of 85 mPa·s.

### Comparative composition 8

462.9g of polyester I and 62.9g of polyether I were dehydrated at 110°C and 80 mbar for 1 hour. Then, 2.3g of 1,4-butanediol were added and cooled while stirring. 62.41g of isocyanate I and 13.6g of isocyanate II were added at 60°C and stirred at 80 to 90°C until an isocyanate content of 1.9% was reached. It was then dissolved in 930g of acetone and cooled to 50°C to obtain a reaction solution. A solution of 13.7g of sodium N-(2-aminoethyl)-2-aminoethanesulfonate, 7.44g of isophorone diamine, 1.0g of hydroxyethylethylenediamine in 50g of water and a solution of 1.23g of silane II in 12.3g of acetone were added respectively to the acetone solution with the prepolymer dissolved therein while vigorously stirring. After stirring for 30 min, the mixture was dispersed by adding 1060g of water. The acetone was separated by distillation for another 7 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 37.6% by weight and an average particle size in the dispersed phase of 155 nm, a pH value of 7.3 and a viscosity of 8416 mPa·s.

### Comparative composition 9

506.8g of polyester I, 18.9g of polyester II and 18.7g of polyether I were dehydrated at 110°C and 80 mbar for 1 hour. Then, 2.3g of 1,4-butanediol were added and cooled while stirring. 65.17g of isocyanate I and 4.17g of isocyanate II were added at 60°C and stirred at 80 to 90°C until an isocyanate content of 1.7% was reached. It was then dissolved in 890g of acetone and cooled to 50°C to obtain a reaction solution. A solution of 13.2g of sodium N-(2-aminoethyl)-2-aminoethanesulfonate, 5.05g of isophorone diamine, 1.6g of hydroxyethylethylenediamine in 60g of water was added to the acetone solution with the prepolymer dissolved therein while vigorously stirring. After stirring for 30 min, the mixture was dispersed by adding 550g of water. The acetone was separated by distillation for another 4 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 50.8% by weight and an average particle size in the dispersed phase of 175 nm, a pH value of 6.7 and a viscosity of 712 mPa·s.

### Comparative composition 10

542.8g of polyester I and 7.5g of polyether I were dehydrated at 110°C and 80 mbar for 1 hour. Then, 2.3g of 1,4-butanediol were added and cooled while stirring. 62.35g of isocyanate I were added at 60°C and stirred at 80 to 90°C until an isocyanate content of 1.9% was reached. It was then dissolved in 930g of acetone and cooled to 50°C to obtain a reaction solution. A solution of 11.47g of sodium N-(2-aminoethyl)-2-aminoethanesulfonate, 2.95g of hydroxyethylethylenediamine in 50g of water and a solution of 0.77g of silane III in 7.7g of acetone were added respectively to the acetone solution with the prepolymer dissolved therein while vigorously stirring. After stirring for 30 min, the mixture was dispersed by adding 570 g of water. The acetone was separated by distillation for another 4 hours. Upon the acetone content being less than 1.0% by weight, 40g of Lucramul 1820 liquid and 12.5 g of a 5% aqueous solution of tetra-sodium pyrophosphate were added respectively. A comparative composition was obtained with a content of solid constituents of 50.3% by weight and an average particle size in the dispersed phase of 165 nm, a pH value of 7.1 and a viscosity of 640 mPa·s.

### Comparative composition 11

421.9 g of polyester I, 170 g of polyester II and 11.36 g of polyether I were dehydrated at 110 °C and 80 mbar for 1 hour, and then cooled down. 71.25g of isocyanate I was added at 60°C and stirred at 80 to 90°C until an isocyanate content of 1.4% was reached. It was then dissolved in 1 100g of acetone and cooled to 50°C to obtain a reaction solution. A solution of 9.64g of sodium N-(2-aminoethyl)-2-aminoethanesulfonate, 4.2g of isophorone diamine, 1.0g of hydroxyethylethylenediamine in 50g of water and a solution of 4.83g of silane V in 48.3g of acetone were added respectively to the acetone solution with the prepolymer dissolved therein while vigorously stirring. After stirring for 30 min, the mixture was dispersed by adding 534g of water. The acetone was separated by distillation for another 3.5 hours. Upon the acetone content being less than 1.0% by weight, 40g of Lucramul 1820 liquid and 13.8g of a 5% aqueous solution of tetra-sodium pyrophosphate were added respectively. A comparative composition was obtained with a content of solid constituents of 55.6% by weight and an average particle size in the dispersed phase of 235 nm, a pH value of 7.0 and a viscosity of 190 mPa·s.

### Comparative composition 12

542.8g of polyester I and 12.6g of polyether III were dehydrated at 110°C and 80 mbar for 1 hour. Then, 2.3g of 1,4-butanediol were added and cooled while stirring. 62.35g of isocyanate I were added at 60°C and stirred at 80 to 90°C until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 2.81g of hydroxyethylethylenediamine in 50g of water and a solution of 1.26g of silane V in 12.6g of acetone were added respectively to the acetone solution with the prepolymer dissolved therein while vigorously stirring. After stirring for 30 min, the mixture was dispersed by adding 570 g of water. The acetone was separated by distillation for another 6 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 50.5% by weight and an average particle size in the dispersed phase of 134 nm, a pH value of 6.7 and a viscosity of 2403 mPa·s.

### Comparative composition 13

542.8g of polyester I and 12.6g of polyether III were dehydrated at 110°C and 80 mbar for 1 hour. Then, 2.3g of 1,4-butanediol were added and cooled while stirring. 62.35g of isocyanate I were added at 60°C and stirred at 80 to 90°C until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 2.81g of hydroxyethylethylenediamine in 50g of water and a solution of 1.54g of silane IV in 15.4g of acetone were added respectively to the acetone solution with the prepolymer dissolved therein while vigorously stirring. After stirring for 30 min, the mixture was dispersed by adding 570 g of water. The acetone was separated by distillation for another 5 hours. Upon the acetone content being less than 1.0% by weight, 40g of Lucramul 1820 liquid and 12.5g of a 5% aqueous solution of tetra-sodium pyrophosphate were added respectively. A comparative composition was obtained with a content of solid constituents of 50.5% by weight and an average particle size in the dispersed phase of 162 nm, a pH value of 6.9 and a viscosity of 1200 mPa·s.

### Comparative composition 14

548.4g of polyester I and 5g of polyether I were dehydrated at 110°C and 80 mbar for 1 hour. Then, 2.3g of 1,4-butanediol were added and cooled while stirring. 62.35g of isocyanate I were added at 60°C and stirred at 80 to 90°C until an isocyanate content of 1.3% was reached. It was then dissolved in 930g of acetone and cooled to 50°C to obtain a reaction solution. A solution of 11.47g of sodium N-(2-aminoethyl)-2-aminoethanesulfonate, 1.87g of hydroxyethylethylenediamine, 1.26g of diethanolamine in 50g of water and a solution of 1.17g of silane I in 11.7g of acetone were added respectively to the acetone solution with the prepolymer dissolved therein while vigorously stirring. After stirring for 30 min, the mixture was dispersed by adding 570g of water. The acetone was separated by distillation for another 4 hours. Upon the acetone content being less than 1.0% by weight, 40g of Lucramul 1820 liquid and 12.5 g of a 5% aqueous solution of tetra-sodium pyrophosphate were added respectively. A comparative composition was obtained with a content of solid constituents of 49.7% by weight and an average particle size in the dispersed phase of 152 nm, a pH value of 6.9 and a viscosity of 542 mPa·s.

### Method for preparing the adhesives of examples and comparative examples

According to the components shown in Table 1 and Table 2, 1.0g of DESMODUR 2802 and 0.7g of BorchiL Gel L75N were sequentially added to 100g of the composition (which was left standing for 7 days at room temperature for ripening) with stirring at a speed of 600rpm, and then stirred at a high speed of 1200rpm for 10 minutes to 15 minutes for mixing thoroughly. The viscosity was adjusted to 5000mPa·s to 10000mPa·s for later use.

### Hydrolysis resistance test

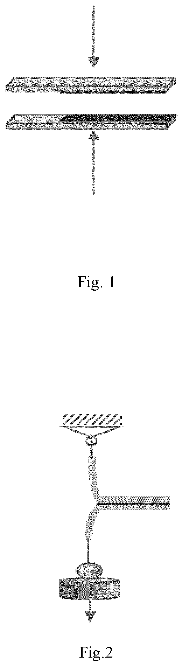

Substrate 1 (black rubber) and substrate 2 (black rubber) with a length of 120 mm and a width of 20 mm were mechanically polished and then coated with a rubber treatment agent (which was obtained by dissolving trichloroisocyanuric acid (B powder) in ethyl acetate). After drying, the adhesives of the present invention were applied using a brush onto the substrate 1 and the substrate 2 with a brushing area of 100mm*20mm. The adhesive was dried and thermally activated by heating the substrate 1 and substrate 2 at 60°C for 3 minutes. Then, the substrate 1 and substrate 2 were bonded for 10 seconds under a pressure of 4 bar to obtain a test sample strip as shown in Fig. 1. After the test sample strip was stored at room temperature (22±2°C, 50±5%RH) for 72 hours, a 1 kg weight was loaded on one end of the substrate, as shown in Fig. 2. It was placed in an oven with a temperature of 70°C and a humidity of 95%. The time taken for the complete detachment of the test sample strip was measured. It was regarded as qualified when the time taken for the complete detachment of the test sample strip was not less than 6 hours. It was regarded as unqualified when the time taken for the complete detachment of the test sample strip was less than 6 hours.

### Hydrolysis resistance test of adhesives after storage at 40°C for two weeks

The test method is the same as the above hydrolysis resistance test, with the exception that the adhesives were placed in an oven at 40°C for two weeks before the hydrolysis resistance test, and then taken out for the hydrolysis resistance test.

### Film formation test at low temperature

The compositions of examples and comparative examples were left standing for 7 days at room temperature for ripening, and then applied at room temperature (22±2°C, 50±5%RH) with a film scraper on PP boards with a wet film of 200 microns. The PP boards were immediately placed in an oven at low temperature of 10°C for at least 8 hours for completely drying. They were taken out to check whether the dry films were cracked. If the dry films were not cracked, the film formation at low temperature was regarded as qualified. If the dry films were cracked, the film formation at low temperature was regarded as unqualified.

Table 1 shows the evaluation results of hydrolysis resistance, hydrolysis resistance after thermal storage, and film formation at low temperature of the adhesives of Examples 1-5 of the present invention and Comparative Examples 1-4. Table 2 shows the evaluation results of hydrolysis resistance and film formation at low temperature of the adhesives of Comparative Examples 5-14.

**Table 1 Evaluation of adhesives of Examples 1-5 and Comparative Examples 1-4**

| Composition of the adhesives | Ex. 1 | Comp. Ex. 1 | Ex. 2 | Comp. Ex. 2 | Ex. 3 | Comp. Ex. 3 | Ex. 4 | Comp. Ex. 4 | Ex. 5 | Ex. 6 |
|---|---|---|---|---|---|---|---|---|---|---|
| Desmodur 2802/g | 1.0 | 1.0 | 1.0 | 1.0 | 1.0 | 1.0 | 1.0 | 1.0 | 1.0 | 1.0 |
| BorchiL Gel L75N/g | 0.7 | 0.7 | 0.7 | 0.7 | 0.7 | 0.7 | 0.7 | 0.7 | 0.7 | 0.7 |
| Composition | 1 | Comp. 1 | 2 | Comp. 2 | 3 | Comp. 3 | 4 | Comp. 4 | 5 | 6 |

| Performance Test | | | | | | | | | | |
|---|---|---|---|---|---|---|---|---|---|---|
| Hydrolysis resistance/h | >8 | >8 | >8 | >8 | >8 | >8 | >8 | >8 | >8 | >8 |
| Film formation at low temperature | Not cracked | Not cracked | Not cracked | Not cracked | Not cracked | Not cracked | Not cracked | Not cracked | Not cracked | Not cracked |
| Hydrolysis resistance of the adhesives after storage at 40°C for 2 weeks/h | >8 | 4.0 | 6.0 | 1.0 | >8 | 5.0 | >8 | 5.0 | 6.0 | >8 |

Remarks: The amount of all compositions of the examples and comparative examples in Table 1 is 100 grams.

**Table 2 Evaluation of adhesives of Comparative Examples 5-14**

| Composition of the adhesive | Comp. Ex. 5 | Comp. Ex. 6 | Comp. Ex. 7 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|---|
| Desmodur 2802/g | 1.0 | 1.0 | 1.0 | 1.0 | 1.0 | 1.0 | 1.0 | 1.0 | 1.0 | 1.0 |
| BorchiL Gel L75N/g | 0.7 | 0.7 | 0.7 | 0.7 | 0.7 | 0.7 | 0.7 | 0.7 | 0.7 | 0.7 |
| Composition | Comp. 5 | Comp. 6 | Comp.7 | Comp. 8 | Comp. 9 | Comp. 10 | Comp. 11 | Comp. 12 | Comp. 13 | Comp. 14 |

| Performance Test | | | | | | | | | | |
|---|---|---|---|---|---|---|---|---|---|---|
| Hydrolysis resistance/h | >8 | >8 | 3.0 | 4.0 | 2.0 | 2.0 | 0.2 | 1.0 | 1.0 | 0.5 |
| Film formation at low temperature | Cracked | Cracke d | Cracked | Not cracked | Not cracked | Not cracked | Not cracked | Not cracked | Not cracked | Not cracked |

Remarks: The amount of all the compositions of the comparative examples in Table 2 is 100 grams.

Adhesives comprising the compositions of Examples 1-5 of the present patent application had good hydrolysis resistance, hydrolysis resistance after thermal storage and film formation at low temperature.

With comparison of Examples 1-4 and Comparative Examples 1-4, it can be seen that the hydrolysis resistance after thermal storage of the adhesives comprising the composition was poor, when the system for preparing the composition did not comprise a chelating agent.

With comparison of Examples 1-4 and Comparative Examples 5-7, it can be seen that the adhesives comprising the composition could not have both hydrolysis resistance and film formation at low temperature, when the system for preparing the composition did not comprise the polymer having a structure of formula I or comprised the polymer having a structure of formula I in an amount of 0.3% by weight and 0.6% by weight.

With comparison of Examples 1-4 and Comparative Examples 9-11, it can be seen that the hydrolysis resistance of the adhesives comprising the composition was poor, when the system for preparing the composition did not comprise the silane compound or comprised the silane compound in an amount of 0.12% by weight and 0.7% by weight.

As can be seen from Comparative Example 8, the hydrolysis resistance of the adhesive comprising the composition was poor, when the system for preparing the composition comprised the polymer having a structure of formula I in an amount of 10% by weight.

As can be seen from Comparative Examples 12-13, the hydrolysis resistance of the adhesives comprising the composition was poor, when the system for preparing the composition comprised a monofunctional polyether polyol.

With comparison of Comparative Example 14 and Examples 2-3, it can be seen that the hydrolysis resistance of the adhesive comprising the composition was very poor, when the system for preparing the composition comprised only a bifunctional silane compound and comprised no monofunctional silane compound.

Those skilled in the art will readily understand that the present invention is not limited to the foregoing details, and can be implemented in other specific forms without departing from the spirit or main characteristics of the present invention. Therefore, the examples should be regarded as illustrative rather than restrictive from any point of view, so that the scope of the present invention is illustrated by the claims rather than the foregoing description. Therefore, any change, as long as it falls into the meaning and scope of equivalents of the claims, shall be regarded as belonging to the present invention.

## Claims

1. A composition comprising
(a) a polyurethane-polyurea polymer obtained by the reaction of a system comprising the following components:
(a1) a polyisocyanate;
(a2) a polymer having a structure of formula I: 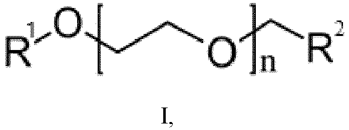
wherein n is 10 to 75, R¹ is an alkyl group containing 1 to 10 carbon atoms, and R² is a moiety containing at least two isocyanate-reactive groups;
(a3) a polyol other than component a2), which has a hydroxyl functionality of 1.5 to 4;
(a4) a silane compound comprising one isocyanate-reactive group and at least two methoxy and/or ethoxy groups attached to the silicon atom;
(a5) a hydrophilic compound comprising 2 to 3 isocyanate-reactive groups, different than (a2); and
(a6) optionally, a compound comprising 1 to 3 amino and/or hydroxyl groups;
wherein the polymer having a structure of formula I is in an amount of 0.7% by weight to 9% by weight, and the silane compound is in an amount of 0.14% by weight to 0.6% by weight, relative to the total weight of the polyurethane-polyurea polymer;
(b) a water soluble chelating agent, which is one or more selected from the group consisting of ethylenediaminetetraacetates, tartrates, citrates, pyrophosphates, tripolyphosphates, hexametaphosphates and gluconates; and
(c) water.

2. The composition according to claim 1, **characterized in that** component a1) the polyisocyanate has at least two isocyanate groups; and is more preferably an isocyanate with the general formula: Y(NCO)₂, wherein Y is selected from a divalent aliphatic hydrocarbon-group containing 4 to 12 carbon atoms, a divalent cycloaliphatic hydrocarbon-group containing 6 to 15 carbon atoms, a divalent aromatic hydrocarbon-group containing 6 to 15 carbon atoms, or a divalent araliphatic hydrocarbon-group containing 7 to 15 carbon atoms; also preferably one or more of tetramethylene diisocyanate, pentamethylene diisocyanate, hexamethylene diisocyanate, dodecamethylene diisocyanate, 1,4-cyclohexane diisocyanate, isophorone diisocyanate, 4,4'-dicyclohexylmethane diisocyanate, 4,4'-dicyclohexylpropane diisocyanate, 1,4-benzene diisocyanate, 2,4-toluene diisocyanate, 2,6-toluene diisocyanate, 4,4'-diphenylmethane diisocyanate, 2,2'- and 2,4'-diphenylmethane diisocyanate, tetramethylxylyl diisocyanate and p-xylylene diisocyanate, most preferably a mixture of hexamethylene diisocyanate and isophorone diisocyanate, or a mixture of hexamethylene diisocyanate and 4,4'-dicyclohexylmethane diisocyanate.

3. The composition according to claim 1 or 2, **characterized in that** the at least two isocyanate-reactive groups in R² are selected from at least two amino groups, at least two hydroxyl groups, or at least one amino group and at least one hydroxyl group.

4. The composition according to any one of claims 1 to 3, **characterized in that** the polymer having a structure of formula I is one or more of a polymer having a structure of formula II and a polymer having a structure of formula III, 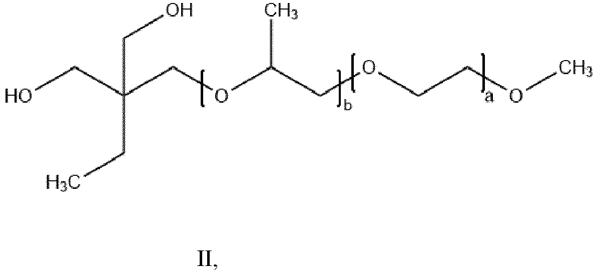 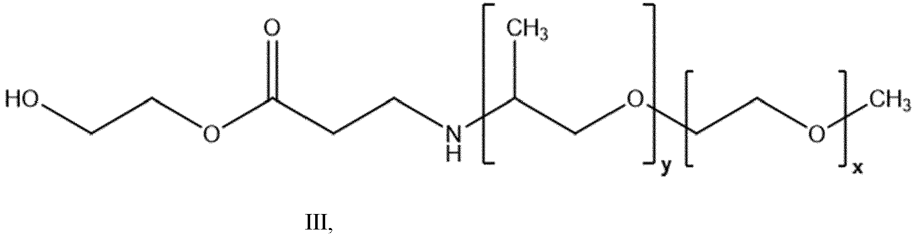 wherein a is 10 to 75, b is 0 to 50 in formula II; and x is 10 to 75, y is 1 to 50 in formula III.

5. The composition according to any one of claims 1 to 4, **characterized in that** component a2) the polymer having a structure of formula I has a number-average molecular weight of 500 g/mol to 4000 g/mol, which is measured by gel chromatography, wherein tetrahydrofuran is used as the mobile phase, and the molecular weight is calculated based on polystyrene as the standard, which is selected with a molecular weight of 200 or higher, and measured with a differential refraction detector (RI detector).

6. The composition according to any one of claims 1 to 5, **characterized in that** component a2) the polymer having a structure of formula I has a functionality of 2.

7. The composition according to any one of claims 1 to 6, **characterized in that** component a3) the polyol other than component a2) is one or more of diols with a number-average molecular weight of 62 to 15000 and polyols with a number-average molecular weight of 62 to 15000, more preferably one or more of diols with a number-average molecular weight of 62 to 5000 and triols with a number-average molecular weight of 92 to 5000, most preferably one or more of polyester polyols containing 1.5 to 3 hydroxyl groups with a number-average molecular weight of 500 to 2500, polycarbonate polyols containing 1.5 to 3 hydroxyl groups with a number-average molecular weight of 400 to 2500, polyether polyols containing 1.5 to 3 hydroxyl groups with a number-average molecular weights of 200 to 2500, polylactone polyols containing 1.5 to 3 hydroxyl groups with a number-average molecular weights of 250 to 2500 and low-molecular-weight alcohols, wherein the number-average molecular weight is measured by gel chromatography, wherein tetrahydrofuran is used as the mobile phase, and the molecular weight is calculated based on polystyrene as the standard, which is selected with a molecular weight of 200 or higher, and measured with a differential refraction detector (RI detector).

8. The composition according to any one of claims 1 to 7, **characterized in that** component a3) the polyol other than component a2) has the enthalpy of fusion of not less than 15 J/g, most preferably 25 J/g to 100 J/g, obtained by DSC from the first heating curve from 20°C to 100°C according to DIN 65467, method A, wherein the loading volume is 10-20 mg, and the heating rate is 20 K/min.

9. The composition according to any one of claims 1 to 8, **characterized in that** component a4) the silane compound comprises at least one amino group.

10. The composition according to any one of claims 1 to 9, **characterized in that** component a4) the silane compound is one or more of N-β-(aminoethyl)-γ-aminopropyltrimethoxysilane, N-β-(aminoethyl)-γ-aminopropyltriethoxysilane, N-(β-aminoethyl)-γ-aminopropylmethyldimethoxysilane, bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane; preferably N-(β-aminoethyl)- γ-aminopropylmethyldimethoxysilane, bis(3-triethoxysilylpropyl)amine, bis(3-trimethoxysilylpropyl)amine, (3-aminopropyl)trimethoxysilane, (3-aminopropyl)triethoxysilane, 3-aminopropyl(diethoxy)methylsilane and 3-aminopropylmethyldimethoxysilane; most preferably one or more of (3-aminopropyl)trimethoxysilane, (3-aminopropyl)triethoxysilane, and 3-aminopropylmethyldimethoxysilane.

11. The composition according to any one of claims 1 to 10, **characterized in that** component a5) the hydrophilic compound comprising 2 to 3 isocyanate-reactive groups is one or more of N-(2-aminoethyl)-2-aminoethanesulfonates, dimethylolpropionates and N-(2-aminoethyl)-2-aminoethanecarboxylates.

12. The composition according to any one of claims 1 to 11, wherein the chelating agent b) is **characterized in that** an aqueous solution thereof at a concentration of 4.3^{∗}10⁻⁷ mol/g and at a temperature of 23°C has a pH value in the range of 3-11, preferably in the range of 4-10, and most preferably in the range of 5-8.w

13. The composition according to any one of claims 1 to 12, **characterized in that** component a6) the compound comprising 1 to 3 amino and/or hydroxyl groups is one or more of aliphatic and/or cycloaliphatic primary and/or secondary monoamines or diamines or triamines or amino alcohols, most preferably one or more of isophorone diamine, N-(2-hydroxyethyl)ethylenediamine and diethanolamine.

14. The composition according to any one of claims 1 to 13, **characterized in that** component a1) is in an amount of 5% by weight to 40% by weight, most preferably 8% by weight to 20% by weight, relative to the total weight of the polyurethane-polyurea.

15. The composition according to any one of claims 1 to 14, **characterized in that** component a2) is in an amount of 0.7% by weight to 4% by weight, relative to the total weight of the polyurethane-polyurea.

16. The composition according to any one of claims 1 to 15, **characterized in that** component a3) is in an amount of 5% by weight to 94% by weight, most preferably 70% by weight to 90% by weight, relative to the total weight of the polyurethane-polyurea.

17. The composition according to any one of claims 1 to 16, **characterized in that** component a4) is in an amount of 0.18% by weight to 0.4% by weight, relative to the total weight of the polyurethane-polyurea.

18. The composition according to any one of claims 1 to 17, **characterized in that** component a5) is in an amount of 0.2% by weight to 50% by weight, most preferably 1% by weight to 5% by weight, relative to the total weight of the polyurethane-polyurea.

19. The composition according to any one of claims 1 to 18, **characterized in that** component b) is in an amount of 0.05% by weight to 0.5% by weight, most preferably 0.1% by weight to 0.2% by weight, relative to the total weight of the polyurethane-polyurea.

20. The composition according to any one of claims 1 to 19, **characterized in that** component a6) the compound comprising 1 to 3 amino and /or hydroxy groups is in an amount of not more than 10% by weight, most preferably 0.5% by weight to 3% by weight, relative to the total weight of the polyurethane-polyurea.

21. A method for preparing the composition according to any one of claims 1 to 20, comprising the steps of mixing (a) the polyurethane-polyurea polymer or components for preparing the polyurethane-polyurea polymer, (b) the chelating agent and (c) water in any desired manner.

22. The method for preparing according to claim 21, **characterized in that** an aqueous polyurethane-polyurea dispersion is formed from (a) the polyurethane-polyurea polymer and (c) water, and then (c) the chelating agent is introduced to obtain the composition.

23. The method for preparing according to claim 21 or 22, **characterized in that** (c) the chelating agent is added in the form of an aqueous solution.

24. A coating, an adhesive or an ink comprising the composition according to any one of claims 1 to 20.

25. The coating, adhesive or ink according to claim 24, further comprising an additive selected from one or more of emulsifiers, light stabilizers, antioxidants, sterilant, fillers, antisettling agents, defoamers, wetting agents, flow conditioners, reactive diluents, plasticizers, neutralizers, catalysts, auxiliary solvents, thickeners, pigments, dyes, matting agents and tackifiers.

26. Use of the composition according to any one of claims 1 to 20 for preparing coated products, bonded products or printed products.

27. An article comprising a substrate prepared, coated, bonded, sealed, or printed with the composition according to any one of claims 1 to 20.
